(19) **Europäisches Patentamt**
**European Patent Office**
**Office européen des brevets**

(11) **EP 2 121 294 B1**

(12) **EUROPEAN PATENT SPECIFICATION**

(45) Date of publication and mention
of the grant of the patent:
**09.02.2011 Bulletin 2011/06**

(51) Int Cl.:
**B29D 30/16** *(2006.01)* **B29D 30/30** *(2006.01)*
**B60C 9/02** *(2006.01)*

(21) Application number: **06841125.5**

(22) Date of filing: **22.12.2006**

(86) International application number:
**PCT/EP2006/012452**

(87) International publication number:
**WO 2008/077418 (03.07.2008 Gazette 2008/27)**

(54) **PROCESS FOR MANUFATURING TYRES BY APPLICATION OF STRIPS HAVING DIFFERENT WIDTHS**

VERFAHREN ZUR HERSTELLUNG VON REIFEN DURCH AUFBRINGEN VON STREIFEN MIT VERSCHIEDENEN BREITEN

PROCESSUS DE FABRICATION DE PNEUS PAR APPLICATION DE BANDES DE LARGEURS DIFFÉRENTES

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**25.11.2009 Bulletin 2009/48**

(73) Proprietor: **Pirelli Tyre S.p.A.**
**20126 Milano (IT)**

(72) Inventors:
• **MANCINI, Gianni**
**I-20126 Milano (IT)**

• **CANTU, Marco**
**I-20126 Milano (IT)**
• **SGALARI, Giorgia**
**I-20126 Milano (IT)**
• **MARCHINI, Maurizio**
**I-20126 Milano (IT)**

(74) Representative: **Giannesi, Pier Giovanni et al**
**Pirelli Pneumatici S.p.A.**
**Viale Sarca 222**
**20126 Milano (IT)**

(56) References cited:
**EP-A1- 1 510 331       EP-A1- 1 650 014**
**EP-A2- 1 095 761       US-A1- 2003 051 794**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the invention

The present invention relates to a process of manufacturing tyres according to the preamble of claim1. Moreover, the present invention further relates to a tyre comprising at least one reinforcing component formed by approached strip-like elements having different widths, according to the preamble of independent claim 10.

A process and a type of this kind is known from e.g. US-A-2003/0051794 or EP-A-1698490.

### Background of the invention

A tyre for vehicle wheels generally comprises a carcass structure including at least one carcass ply having respectively opposite ends associated with annular anchoring structures, each of said anchoring structures being usually made up of a substantially circumferential annular insert onto which at least one filling insert is applied, at a radially external position thereof. The carcass ply or plies typically comprise(s) reinforcing textile or metal (*e.g.* steel) reinforcing thread-like elements (such as wires and/or cords) disposed on a plane substantially orthogonal to a travel direction of the tyre in so-called radial tyres, more generally at an angle between 70° and 110°.

A belt (or breaker) structure is associated with the carcass structure. The belt structure comprises one or more belt layers, arranged in radial superposed relationship with each other and with the carcass structure, and having textile or metal reinforcing thread-like elements of crossed orientation (typically between 15° and 65° versus a travel direction of the tyre). A tread band is applied to the belt structure, at a radially external position thereof, made of elastomeric material, like other constituent parts of the tyre.

In most of the known processes for tyre manufacture, the carcass structure and the belt structure (together with the respective tread band) are provided to be made separately of each other in respective work stations, to be mutually assembled at a later time.

More particularly, manufacture of the carcass structure first contemplates deposition of the carcass ply or plies on a first drum usually identified as "building drum" to form a cylindrical sleeve. The annular anchoring structures at the beads are fitted or formed on the opposite ends of the carcass ply or plies, which are turned up around the annular structures themselves so as to enclose the latter ones.

At the same time, on a second drum, or auxiliary drum, an outer sleeve is made which comprises the belt layers laid down in radially superposed relationship with each other, and the tread band applied to the belt layers at a radially external position thereof. The outer sleeve is then picked up from the auxiliary drum to be coupled with the carcass sleeve. For that purpose, the outer sleeve is disposed in coaxial relation around the carcass sleeve, afterwards the carcass ply or plies are shaped into a toroidal conformation by axially moving the beads close to each other and simultaneously admitting fluid under pressure into the carcass sleeve, so as to determine application of the belt structure and the tread band to the carcass structure of the tyre at a radially external position thereof.

Assembling of the carcass sleeve with the outer sleeve can be carried out on the same drum as used for building the carcass cylindrical sleeve, in which case reference is made to a "unistage building process". Alternatively, assembling may be carried out on a so-called "shaping drum" onto which the carcass cylindrical sleeve is transferred and then expanded to obtain a toroidal shape and to couple with the outer sleeve, according to a so-called "two-stage building process".

According to conventional techniques, each of the carcass plies and/or the belt layers can be formed as a sheet component applied as a single piece on the building drum and/or on the auxiliary drum.

Alternatively, according to recently developed processes, the carcass plies and the belt layers are produced by application of a series of strip-like elements, or strips. In order to form a belt layer or a carcass ply the strips can be either arranged side-by-side or by overlapping an edge portion thereof.

US 2003/051794 A1 discloses a tire structural member manufacturing method in which a tire structural member is formed by the steps of continuously forming a continuous strip of a width including that of a joint lap, cutting the continuous strip into successive cut strips of a length substantially equal to the section width of a tire, and successively laying and joining a predetermined number of the cut strips. The tire structural member manufacturing method of US 2003/051794 forms the tire structural member also by the steps of continuously feeding a continuous strip to a strip-laying head, laying the continuous strip on a strip support while the strip-laying head is moved over the strip support for a forward stroke, cutting the continuous strip in a cut strip of a predetermined length when the strip-laying head reaches a position near the terminal of its forward stroke, changing the position of the strip-laying head by moving the strip-laying head and the strip support relative to each other, laying the continuous strip on the strip support while the strip-laying head is moved for a backward stroke, and repeating those steps overlap cut strips.

EP 1650014 A1 discloses a cord-reinforced band having at least one cord cut into a plurality of cord-reinforced strips of a predetermined length. The cord-reinforced strips are arranged successively such that side edge parts of adjacent cord-reinforced strips overlap each other and the adjacent cord-reinforced strips are bonded together to form a tire structural member of a predetermined length with respect to a direction perpendicular to the longitudinal side edges of the cord-reinforced strips. According to the tire structural member manufacturing method of EP 1650014 A1 one and the same extrusion die is used, having an extrusion opening of a fixed width regardless of a pitch at which the cords are arranged in the tire structural member.

EP 1510331 A1 discloses a tire component fabricated by the steps of forming a narrow belt by arranging a plurality of cords and embedding the cords in a rubber layer, cutting the belt into strips of a predetermined length, and successively arranging and joining a necessary number of the strips such that edge parts of adjacent strips overlap each other with the outermost cord in the edge part of one of the adjacent strips overlying the outermost cord in the edge part of the other strip. The cords are arranged in each strip in a width equal to a length shorter than a length equal to an integral division of the predetermined circumference of a tire by a length corresponding to an increase in the diameter of the tire component.

EP 1095761 A2 discloses a strip joint having a required length produced by obliquely feeding a given amount of a strip of rubberized cords onto a conveyor from a given separated distance, cutting the strip along the conveyor, moving the cut strip piece in a given moving pitch amount through the conveyor, joining a front end portion of a subsequently fed strip piece to a rear end portion of the preceding strip piece, and successively repeating these procedures, wherein the moving pitch amount is adjusted by controlling the movement of the conveyor to produce a strip joint of a required length.

As observed in EP 1652658, a single layer applied as non-overlapped strips enhances uniformity and consistency of the tyre construction across the tyre radial width. However, merely applying the strips edge-to-edge across the tread region rather than by overlapping causes a new set of difficulties and can result in material waste. Still with reference to EP 1652658, for example, a typical passenger tyre may require 20 to 60 strips. Applying the strips in an edge-to-edge, zero clearance configuration would require cutting a 21st or 61st strip to fill a final gap. Destruction of a strip in order to fill a remainder gap on each tyre results in an unacceptable level of scrap and high manufacturing costs.

In principle, strips of a precise and prescribed width could be utilized in an edge-to-edge non-overlapping layer in order to leave no remainder gap. However, according to EP 1652658, such an approach would necessitate expensive production and inventorying of strips of varying widths in order to accommodate tyres of varying sizes.

In order to solve the above problems, EP 1652658 suggests a method and a corresponding apparatus for applying a breaker or another reinforcement layer strip by strip. The method of EP 1652658 comprises:

a) calculating an end gap based upon a nominal strip width, the size of the carcass and the end count desired;
b) calculating a distributed gap required to distribute the calculated end gap substantially equally between each strip; and
c) applying the breaker or the other reinforcement layer strip by strip with each strip being separated from an adjacent strip by the distributed gap spacing.

EP 1568476 discloses a method of forming a cord-reinforced tire structural member, including the steps of: forming strips of a predetermined width reinforced by a predetermined number of cords of a type, and forming a tyre structural member by successively arranging a predetermined number of the strips, which is specified for a tyre size, and joining together side edge parts of adjacent strips. According to an embodiment, the strips are formed in a width of about $\pi$ inches, and a tyre structural member for a tyre of a size of n inches (n is an integer) is formed by successively connecting the n strips.

EP 1698490 discloses a pneumatic tyre in which formation of a belt layer is realized by using an integer number of strip pieces and without causing any overlap between the strip pieces, and a method of manufacturing the same. In the method, the belt layer is formed by aligning $N$ strip pieces on a molding drum in the circumferential direction of the tyre with equal spaces disposed between adjacent strips pieces, wherein $N$ is selected as an integer satisfying. $(N+1) xA/sin(\theta) > L > NxA/sin(\theta)$, and wherein $A$, $\theta$, and $L$ respectively denote a width of the respective strip pieces, a cord angle of the belt layer with respect to a circumferential direction of the tyre, and a circumferential length of the belt layer.

For manufacturing a tyre with two belt layers, the method of EP 1698490 includes the steps of: setting an applicable number of strip pieces $N_2$ equal to an applicable number of strip pieces $N_1$ while selecting an integer $N_1$ satisfying $L_1 = N_1 \times A/sin(\theta)$ as the applicable number $N_1$; forming the inner belt layer by joining the $N_1$ strips pieces to one another in a manner that each of both sides of each strip piece is butted with one side of another strip piece; and forming the outer belt layer by aligning the $N_2$ strip pieces on the inner belt layer in a circumferential direction of the tyre with spaces, which are equivalent to $2\pi G/N_2$, disposed between adjacent ones of these $N_2$ strip pieces, wherein $A$, $G$, $\theta$, $L_1$ and $L_2$ respectively denote a width of the respective strip pieces, a thickness of the respective strip pieces, a cord angle of the respective belt layers with respect to a circumferential direction of the tyre, and circumferential lengths of the respective inner and outer belt layers.

## Summary of the invention

The Applicant observes that a complete tyre production line requires a high level of flexibility. In fact, an efficient management of the manufacturing steps is required in order to cope with the different tyre sizes and models to be produced, without introducing substantial increase of costs, waste, and/or manufacturing time.

The Applicant further observes that the length of each reinforcing component of a tyre (*i.e.* each tyre component comprising reinforcing thread-like elements, such as the layers forming the carcass structure and/or the belt structure) should match, as far as possible, a respective given target circumference, *i.e.* a circumferential length measured on a manufacturing drum on which the reinforcing component should be applied at a given manufacturing step (either a building drum, or an auxiliary drum, or, in general, any kind of drum used during the manufacturing of a green tyre).

In this respect, it is observed that an incorrect matching of the target circumference to be covered may lead to unacceptable non-uniformities in the finished tyre. The presence of such non-uniformities could be particularly detrimental to the quality of tyres (either car tyres, or motorcycle tyres, or truck/bus tyres), in particular for high or ultra high performance (HP/UHP) tyres, which should be suitable for supporting high speeds and/or extreme driving conditions. For example, non-uniformities in the carcass structure may lead to an irregular wear of the tyre tread during use. As another example, a scarce matching of the target circumference when forming a belt layer, corrected by forcing the ends of the layer for joining the same with each other, could lead to various problems, including: resulting angle of the reinforcing thread-like elements with respect to the equatorial plane of the tyre different from the one specifically designed for the tyre; non-uniformity of the same angle along the circumference of the tyre; differences from tyre to tyre in the same production lot.

Thus, complexity arises in a complete tyre production line, since many different target circumferences should be matched, depending on several factors, including: the tyre model, the tyre size, the diameter of the manufacturing drum, the shape of the manufacturing drum, the thickness of underlying layers already applied on the drum, *etc.*

The Applicant further observes that known methods for defining an optimal arrangement, number, and/or size of strips to be used for forming reinforcing components of the tyres often refer to the manufacturing of a single tyre size, and/or of a single reinforcing layer. Thus, these methods may fail in case tyres of different models and/or sizes have to be produced, since a strip arrangement, or a strip size, being optimal for matching a target circumference for a certain tyre size, or for a certain layer to be formed, could be far from being optimal for matching the target circumference for a different tyre size, or for a different layer to be formed.

In particular, as far as the width of the strip is concerned, it cannot be guaranteed that a strip of given width, optimized for forming a given layer in a tyre of a given size substantially without any final gap between the first and the last strip, could be used for forming another layer in the same tyre and/or the same layer in another tyre size substantially without any final gap between the first and the last strip. For example, a certain strip width may lead to perfectly match the target circumference when forming a first carcass ply, but not when forming a second carcass ply to be superposed to the first in the same tyre. As another example, a certain strip width could lead to perfectly match the target circumference when forming a carcass ply or a belt layer to be used for one tyre size or model, but not when forming a carcass ply or a belt layer to be used for another tyre size or model.

A possible solution to the above could be to set the strip width to π inches, and to form a reinforcing component for a tyre of a size of *n* inches by successively connecting n strips, as suggested in EP 1568476. This solution could be useful for producing reinforcing components for tyres of different sizes by using the same strip width. However, it is observed that this solution disadvantageously imposes a strong constraint in the choice of the diameter of the manufacturing drum, which should be equal to the rim diameter for all the tyre sizes to be produced in order to have a target circumference (expressed in inches) equal to an integer number of π.

On the contrary, it would be advantageous to freely choose the diameter of the manufacturing drum, for example in order to reduce the extent of the shaping of the carcass structure for the coupling with the belt structure. As a consequence, the target circumference to be covered with the strips could be very different from an integer number of π. The flexibility in the choice of the diameter of the manufacturing drum thus imposes additional complexity in the setting of an optimal width for the strips to be used.

The Applicant has understood that in order to combine the flexibility required by a complete tyre production line with a high quality of the produced tyres, without introducing disadvantageous increase of costs, material waste and/or manufacturing time, a further degree of freedom is needed for the application of strip-like elements. In particular, the Applicant has understood that the use of strip-like elements of different widths for the formation of the reinforcing layers of a tyre could provide an effective solution to cope with the required production flexibility and tyre quality. In particular, it has been found that a complete tyre production line (*i.e.* a production line suitable for producing tyres of different sizes and/or models) could be advantageously achieved by using strips of two different widths for the formation of the reinforcing components of the tyres.

In a first aspect, the invention relates according to independent claim1 to a process for manufacturing a tyre comprising:

- providing a first plurality of strip-like elements, each substantially having a first effective width;
- providing a second plurality of strip-like elements, each substantially having a second effective width;
- arranging the strip-like elements of said first plurality and of said second plurality on a support by approaching side edge portions thereof to one another, so as to form at least one reinforcing component of the tyre on said support;

wherein said first effective width is different from said second effective width.

Particular embodiments of the invention according to claim 1 are the subject of the dependent claims 2 to 9.

For the purposes of the present invention, the term "plurality" should be interpreted as meaning "at least two".

For the purposes of the present invention, the expression "strip-like element" indicates an elongated element of elastomeric material incorporating reinforcing thread-like elements generally disposed substantially parallel to each other along the longitudinal direction of the elongated element. For the purposes of the present invention, the expression "reinforcing thread-like element" includes a wire or a cord (typically made of a textile or metal material).

For the purposes of the present invention, the "effective width" of a strip-like element indicates the width (measured in an orthogonal direction versus the thread-like element direction) of the portion of the strip-like element actually contributing to the circumferential length of the formed reinforcing component. The effective width of a strip-like element practically corresponds to the maximum width of the strip-like element in case the strip-like element is abutted to the adjacent strip-like element, with no overlapping; on the other hand, in case of overlapping, the effective width of a strip-like element practically corresponds to the maximum width of the strip-like element minus the width of the side edge portion of the strip-like element destined to overlap the adjacent strip-like element.

For the purposes of the present invention, the expression "each substantially having the same width" referred to the strip-like elements of the first plurality or of the second plurality indicates that all the strip-like elements of the respective plurality have the same width but for typical fabrication tolerances (*e.g.* within 0.3 mm, preferably within 0.1 mm).

The use of strip-like elements of different widths for manufacturing the reinforcing layers of a tyre may provide the level of flexibility requested by a complete production line. With this choice, the manufacturing process could be designed with reduced design constraints, without the need of large inventories of strips of different sizes, and/or without the need of continuously modifying the strip width in order to cope with a tyre size change and/or with a different target circumference to be covered. In particular, it has been found that practically all the reinforcing layers of a tyre could be formed by using strip-like elements of two different widths, substantially for any practical tyre size to be produced, with a dramatic reduction in manufacturing complexity.

The number of reinforcing thread-like elements in the strip-like elements of the first plurality typically results in being different from the number of reinforcing thread-like elements in the strip-like elements of the second plurality. However, the reinforcing thread-like elements may be arranged in the strip-like elements of the first and of the second plurality with substantially the same pitch (*i.e.* the same distance between thread-like elements). This advantageously results in the same reinforcing thread-like element pitch in the formed reinforcing component, thus avoiding undesirable non-uniformities in the produced tyre.

The at least one reinforcing component of the tyre to be produced in the process according to the present invention may comprise at least one carcass ply, and/or at least one belt layer.

The approaching of the side edge portions of the strip-like elements of the first plurality and of the second plurality may be either performed by abutting side edges of the strip-like elements to one another, or by overlapping side edge portions of the strip-like elements to the adjacent ones. It is noticed that uniformity of the finished tyre could be improved by abutting side edges of the strip-like elements to one another.

Advantageously, the arranging of the strip-like elements of the first plurality and of the second plurality may comprise arranging strip-like elements of the first plurality alternated with strip-like elements of the second plurality in at least one portion of the at least one reinforcing component of the tyre. The arranging of the strip-like elements of the first plurality alternated with the strip-like elements of the second plurality may lead to a finished tyre having reduced vibrational effects caused by harmonic components due to the joins between the various strip-like elements.

Alternatively, the arranging of the strip-like elements of the first plurality and of the second plurality may comprise:

- arranging the strip-like elements of the first plurality by approaching side edge portions thereof to one another, so as to form a first portion of said at least one reinforcing component (either by abutting or by overlapping);
- arranging the strip-like elements of the second plurality by approaching side edge portions thereof to one another, so as to form a second portion of said at least one reinforcing component (either by abutting or by overlapping);
- approaching side edge portions of the first and the second portions of said at least one reinforcing component to one another to form said at least one reinforcing component (either by abutting or by overlapping).

In order to improve uniformity, the total length of the at least one reinforcing component formed by the arranged strip-like elements of the first plurality and of the second plurality can be made to be substantially equal to a respective target circumference of said at least one reinforcing component. For the purposes of the present invention, the target circumference of a reinforcing component corresponds to the circumference to be covered by the reinforcing component when applied on a manufacturing drum (possibly over underlying layers), during preparation of a green tyre.

In particular, the length of the at least one reinforcing component formed by the arranged strip-like elements of the first plurality and of the second plurality can be made to differ from the target circumference by a value being lower than a preset threshold value. An acceptable threshold value could be, for example, 0.5% of the target circumference.

The process of the invention may give particular advantages in case of use of strip-like elements (for both the first and the second plurality) having a high width. A "high width" may correspond to at least 1% of the target circumference (*e.g.* at least 15 mm). The use of high width strip-like elements could speed up the process of manufacturing of a tyre. However, joins between high width strip-like elements are more far to each other. In such situation, less-than-perfect join between the strip-like elements leads to "isolated" non-uniformities, which tend to give a worst effect on the performance of the tyre.

Being $N1$ a first integer number of the strip-like elements of the first plurality and $N2$ a second integer number of the strip-like elements of the second plurality, it may be preferably provided that both $N1$ and $N2$ be greater than or equal to $(N1+N2)/5$ (*i.e.* both $N1$ and $N2$ are greater than 20% of the sum of $N1$ and $N2$).

More preferably, it may be provided that both $N1$ and $N2$ be greater than or equal to $2(N1+N2)15$ (*i.e.* both $N1$ and $N2$ are greater than 40% of the sum of $N1$ and $N2$).

Even more preferably, it may be provided that $N1$ and $N2$ differ by at most one, *i.e.* $N2=N1$ or $N2=N1+1$.

The arranging of the strip-like elements of the first plurality and of the second plurality is performed on a surface of the support used for arranging the strip-like elements. The surface of the support may be a cylindrical or toroidal surface (*e.g.* the support may be a manufacturing drum, and the arranging of the strip-like elements is performed on an external surface thereof). Alternatively, the surface of the support may be a plane surface (*e.g.* the support may be a conveyor belt). In case of deposition on a toroidal surface, the target circumference could be chosen in any convenient manner, for example at the equatorial plane.

It may be convenient to set the first effective width, *i.e.* the effective width of the first plurality of strip-like elements, and the second effective width, *i.e.* the effective width of the second plurality of strip-like elements, so that they slightly differ from each other, *e.g.* so that they differ from each other of at most 5 mm, or, more preferably, of at most 2 mm. By using strip-like elements having slightly differing effective width, the response of the finished tyre to the forces developed by the interaction with the ground during rolling may advantageously result to be more uniform, with a significant improvement in the performance of the tyre during use.

In a second aspect, the invention relates according to independent claim 10 to a tyre comprising at least one reinforcing component formed by approached strip-like elements, wherein said strip-like elements comprise a first plurality of strip-like elements, each substantially having a first effective width, and a second plurality of strip-like elements, each substantially having a second effective width, wherein said first effective width is different from said second effective width.

Particular embodiment of the invention according to claim 10 are the subject of the dependent claims 11 to 16.

The reinforcing thread-like elements comprised within the strip-like elements can have substantially the same pitch in both the strip-like elements of the first plurality and the strip-like elements of the second plurality.

The at least one reinforcing component of the tyre may comprise at least one carcass ply, and/or at least one belt layer.

In one embodiment, the strip-like elements of the first plurality and of the second plurality are alternated with each other in at least one portion of the at least one reinforcing component.

Being $N1$ a first integer number of the strip-like elements of the first plurality and $N2$ a second integer number of the strip-like elements of the second plurality, it may be preferably provided that both $N1$ and $N2$ be greater than or equal to $(N1+N2)/5$ (*i.e.* both $N1$ and $N2$ are greater than 20% of the sum of $N1$ and $N2$).

More preferably, it may be provided that both $N1$ and $N2$ be greater than or equal to $2(N1+N2)/5$ (*i.e.* both $N1$ and $N2$ are greater than 40% of the sum of $N1$ and $N2$).

Even more preferably, it may be provided that $N1$ and $N2$ differ by at most one, *i.e.* $N2=N1$ or $N2=N1+1$.

The first effective width, *i.e.* the effective width of the first plurality of strip-like elements, and the second effective width, *i.e.* the effective width of the second plurality of strip-like elements, can be such that they slightly differ from each other, *e.g.* such that they differ from each other of at most 5 mm, or, more preferably, of at most 2 mm.

The first and the second effective widths may be, for example, higher than or equal to 15 mm.

**Brief description of the drawings**

The features and advantages of the present invention will be made apparent by the following detailed description of some exemplary embodiments thereof, provided merely by way of non-limitative examples, description that will refer to the attached drawings, wherein:

- Figure 1 shows a partial perspective view of an exemplary radial tyre including at least one reinforcing component

according to the present invention;

- Figure 1A schematically shows a conventional extruding line adapted for manufacturing a strip-like element;
- Figure 2 schematically shows a portion of a carcass ply formed according to one embodiment of the present invention, in which strip-like elements A, B having different effective widths W1, W2 are arranged in alternated fashion;
- Figure 3 schematically shows a portion of a belt layer formed according to one embodiment of the present invention, in which strip-like elements A, B having different effective widths W1, W2 are arranged in alternated fashion;
- Figure 4 schematically shows a portion of a carcass ply formed according to another embodiment of the present invention, in which strip-like elements A, B having different effective widths W1, W2 are arranged so as to form a first portion of the carcass ply made of strip-like elements A and a second portion of the carcass ply made of strip-like elements B;
- Figure 5 schematically shows a portion of a belt layer formed according to another embodiment of the present invention, in which strip-like elements A, B having different effective widths W1, W2 are arranged so as to form a first portion of the belt layer made of strip-like elements A and a second portion of the belt layer made of strip-like elements B;
- Figure 6 schematically shows a manufacturing drum on which a reinforcing layer is formed according to one embodiment of the present invention, with strip-like elements A, B having different effective widths being arranged in equal number on the drum, alternated with each other over the whole drum circumference;
- Figure 7 schematically shows a manufacturing drum on which a reinforcing layer is formed according to one embodiment of the present invention, with strip-like elements A, B having different effective widths being arranged in a respective different number on the drum, alternated with each other only in portions of the drum circumference;
- Figures 8A and 8B show transverse sections of exemplary embodiments of strip-like elements usable in the present invention, having different effective widths *W1* and *W2*.

## Detailed description of the invention

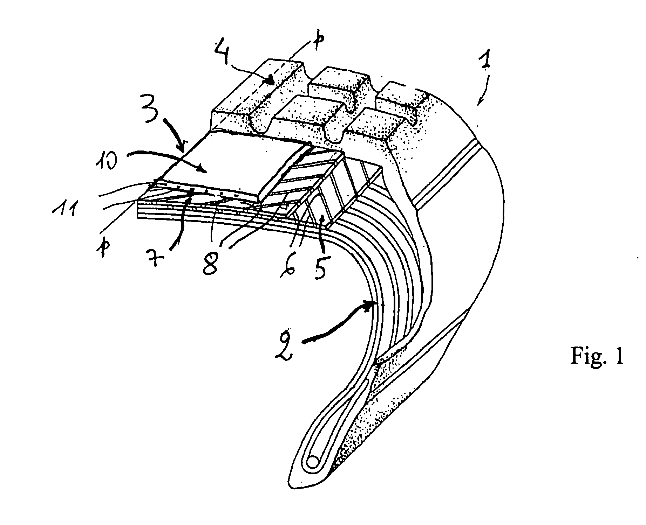

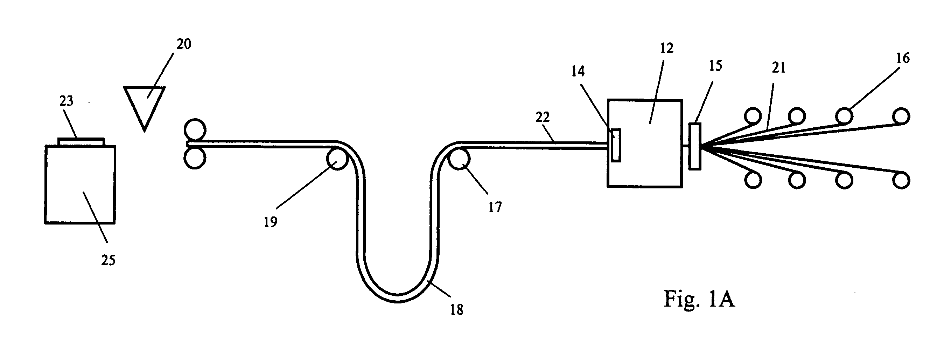

With reference to Figure 1, reference sign 1 generally indicates an exemplary radial tyre for motor vehicles comprising at least one reinforcing component, according to the present invention. The at least one reinforcing component may comprise a carcass ply, and/or a belt layer, and/or any other reinforcing component of the tyre comprising reinforcing thread-like elements disposed along a transverse direction with respect to the equatorial plane p-p of the tyre.

The tyre 1 comprises a carcass structure 2 having one or more carcass plies, each comprising thread-like elements (schematically shown) consecutively adjacent to each other and placed in substantially radial planes containing the rotation axis of the tyre. A belt structure, indicated in a general way by 3, is applied circumferentially around the carcass structure 2, in a centered position with respect to the equatorial plane p-p of the tyre, and a tread band 4 is placed in a position radially external to the belt structure.

The belt structure 3 has at least a first belt layer 5 in a position radially external to the carcass 2, a second belt layer 7 placed in a position radially external to said first layer 5, and a reinforcing layer 10 in a position radially external to said second ply 7. The first belt layer 5 and the second belt layer 7 comprise thread-like elements 6, 8 adjacent to each other and orientated obliquely with respect to the equatorial plane p-p of the tyre. Moreover, the thread-like elements 8 of the second belt layer 7 are inclined in the opposite direction with respect to the thread-like elements 6 of the first belt layer 5. Differently, the thread-like elements 11 of the reinforcing layer 10 are substantially parallel to each other and orientated in a direction substantially parallel to the equatorial plane p-p of the tyre.

As explained above in the summary, according to the invention strip-like elements of different effective widths are used to form at least one reinforcing component of a tyre comprising reinforcing thread-like elements disposed along a transverse direction with respect to the equatorial plane p-p of the tyre. The at least one reinforcing component may be a carcass ply of the carcass structure 2, and/or a belt layer 5, 7, and/or any other reinforcing component of the tyre comprising reinforcing thread-like elements orientated obliquely with respect to the equatorial plane p-p of the tyre. Preferred embodiments may provide that strip-like elements of two different effective widths be used to form all the reinforcing layers of the tyre (each layer comprising the strip-like elements of both different widths). In particular, it may be provided that the reinforcing layer(s) of the carcass structure and the reinforcing layers of the belt structure are formed with strip-like elements of respective effective widths. In other words, the carcass ply or plies could be formed by strip-like elements having effective widths *W1, W2* (with *W1≠W2),* whereas the belt layers could be formed by strip-like elements having effective widths *W3, W4* (with *W3≠W4*), wherein *W3* and *W4* could be respectively equal to *W1* and *W2*, or wherein at least one of *W3, W4* could be different from at least one of *W1, W2*.

Figure 1A schematically shows a conventional exemplary apparatus adapted for manufacturing a strip-like element. The strip-like elements will be simply indicated as "strips" in the remainder of the description, for brevity.

With reference to Figure 1A, an extruder 12 for extruding an elastomeric compound has a cylinder internally provided with a screw, and a hopper connected to the cylinder to feed the elastomeric compound into the cylinder. The screw is rotated to knead the elastomeric compound fed into the cylinder and to carry the elastomeric compound through the front end of the cylinder to a die 14 of a predetermined shape, typically held in an insulation head.

An inserter 15 is disposed behind the die 14 of the extruder 12. A plurality of reinforcing thread-like elements 21, such as steel cords or textile cords, unwound from a plurality of reels 16 disposed behind the inserter 15, are arranged parallel to each other in a horizontal plane (*i.e.* a plane orthogonal to Figure 1A). The reinforcing thread-like elements 21 will be exemplarily indicated as "cords" in the following of the description, for brevity. The parallel cords 21 travel through the die 14 as the elastomeric compound is extruded through the die 14 to coat the cords 21 with the rubber compound. Thus, a cord-reinforced strip 22 of a predetermined shape and width is formed continuously.

The cord-reinforced continuous strip 22 of a predetermined width extruded by the extruder 14 is guided by pulling through a pull drum 17. The cord-reinforced continuous strip 22 is further delivered through an idle roller 19 towards a support 25, such as a belt conveyor, or a cylinder manufacturing drum, or a toroidal manufacturing drum. A festoon 18 is formed between the pull roller 17 and the idle roller 19.

A cutter 20 is disposed in front of the support 25. The cutter 20 cuts the cord-reinforced continuous strip 22 into strips 23 of a predetermined length. The strips 23 are delivered successively onto the support 25 by conventional means, not shown in Figure 1A. When forming a carcass ply, the strips 23 are arranged in a direction substantially perpendicular to an advance direction of the support 25 (typically between 70° and 110°). When forming a belt layer, the strips 23 are arranged in a direction forming an angle θ with the advance direction of the support 25 being typically comprised between 15° and 65°.

In an alternative configuration, not shown in Figure 1A, the cord-reinforced continuous strip 22 produced by the extruder 14 is wound as semi-finished product on a suitable reel. The reel carrying the wound cord-reinforced continuous strip 22 could then be approached to the cutter 20, in order to form the strips 23 of predetermined length to be arranged on the support 25.

In operation, the strip 23 is delivered onto the support 25, the support 25 is driven to advance the strip 23 by a predetermined distance, and then the next strip 23 is delivered onto the support 25 so that a front side edge portion of the subsequent strip 23 is approached to a back side edge portion of the preceding strip 23. The approaching may be either performed by overlapping the side edge portions, or by abutting the side edges of the strips 23. The approached side edge portions of the adjacent strips 23 are then joined together. These steps are repeated until a target length for the reinforcing layer being formed is reached.

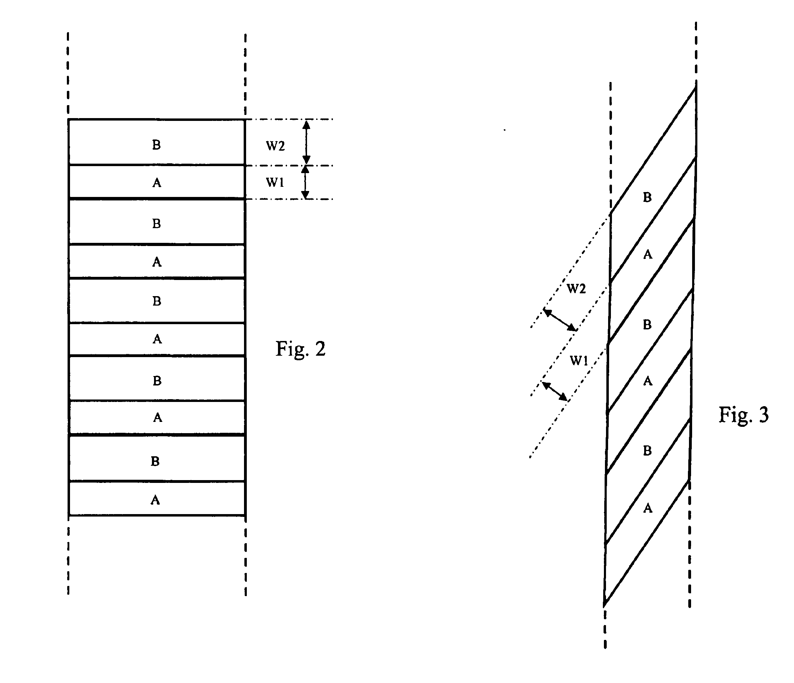

Figure 2 and Figure 3 respectively show, in schematic way, portions of a carcass ply and of a belt layer formed according to embodiments of the present invention.

The carcass ply of Figure 2 and the belt layer of Figure 3 are formed by alternating a plurality of strips A to a plurality of strips B, respectively having an effective width $W1$ and $W2$, with $W1{\neq}W2$. For example, the carcass ply and the belt layer could be formed on a respective conveyor belt (not shown). The feeding to the conveyor belt of the strips A could be provided by a first extruding line, and the feeding to the conveyor belt of the strips B could be provided by a second extruding line, the first and the second extruding lines being for example similar to those shown in Figure 1.

Alternatively, a single extruding line could be used for manufacturing a strip of cumulative effective width $W1{+}W2$, which is then longitudinally cut to result in two continuous strips having effective widths $W1$ and $W2$, before cutting the strips to the length needed by the reinforcing layer being prepared and feeding of the strips on the conveyor belt.

In further embodiments, the strips A and B could be provided by unwinding of a continuous strip prepared in advance from suitable reels, cut to length and fed to the conveyor belt (either from two reels carrying continuous strips respectively of effective width $W1$ and $W2$, or from one reel continuous strip of cumulative effective width $W1{+}W2$ longitudinally cut to form the continuous strips having effective widths $W1$ and $W2$).

In order to improve production efficiency, the provision of the plurality of strips A and of the plurality of strips B to the conveyor belt could be performed in parallel. For example, while a strip A is being applied to the conveyor belt and joined to the previous strip B, the subsequent strip B is being drawn and cut. Advantageously, application of the strips A and B on the conveyor belt could be provided from opposite sides of the conveyor belt. Advance of the conveyor belt could be suitably controlled in order to allow the alternated deposition of the strips A and B.

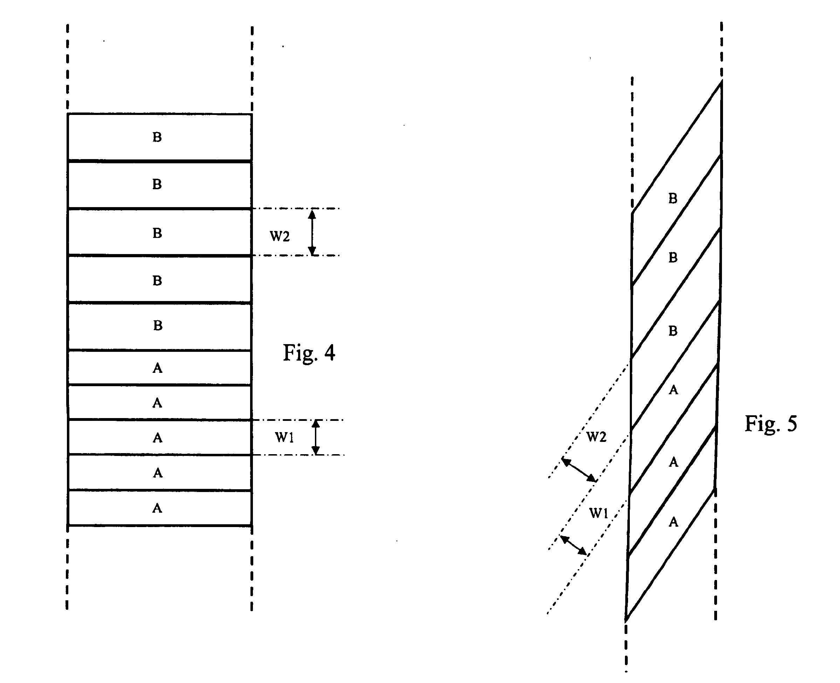

Figure 4 and Figure 5 respectively show, in schematic way, portions of a carcass ply and of a belt layer formed according to further embodiments of the present invention.

The carcass ply of Figure 4 and the belt layer of Figure 5 are formed by separately forming a first portion with a plurality of strips A and a second portion with a plurality of strips B, respectively having an effective width $W1$ and $W2$, with $W1{\neq}W2$, and then by joining the two portions (either by overlapping side edge portions or by butting side edges thereof).

For example, the first and the second portions of the carcass ply and/or of the belt layer could be formed on two respective conveyor belts (not shown). The feeding to the respective conveyor belt of the strips A could be provided by a first extruding line, and the feeding to the respective conveyor belt of the strips B could be provided by a second extruding line, the first and the second extruding lines being for example similar to those shown in Figure 1.

Alternatively, a single extruding line could be used for manufacturing a strip of cumulative effective width $W1{+}W2$, then suitably longitudinally cut to result in two continuous strips having effective widths $W1$ and $W2$, before cutting the strips to the length needed by the reinforcing layer being prepared and feeding of the strips on the respective conveyor belts.

In further embodiments, the strips A and B could be provided by unwinding of a continuous strip prepared in advance from suitable reels, cut to length and fed to the respective conveyor belts (either from two reels carrying continuous strips respectively of effective width $W1$ and $W2$, or from one reel continuous strip of cumulative effective width $W1+W2$ longitudinally cut to form the continuous strips having effective widths $W1$ and $W2$).

In order to improve production efficiency, the application of the plurality of strips A and of the plurality of strips B to the conveyor belts could be performed in parallel on the two conveyor belts.

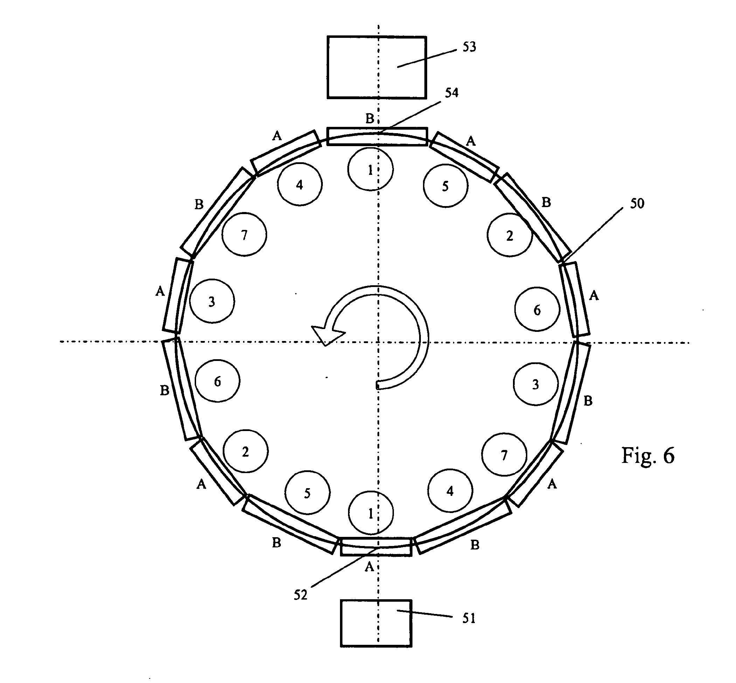

Figure 6 schematically shows a further embodiment of the application of the strips A, B having different effective width for forming a reinforcing layer (either a carcass ply or a belt layer). In the embodiment shown in Figure 6, the strips A, B are applied to a manufacturing drum 50, which is shown in a transverse section. The drum 50 could be a cylindrical drum, or a toroidal drum. In this description, by "manufacturing drum" it has to be intended any kind of manufacturing drum used for the preparation of at least a portion of a green tyre, $e.g.$ a building drum, or an auxiliary drum, or a shaping drum. In the schematic representation of Figure 6, the strips A, B are shown (in transverse section) as being rectilinear, while actually in such configuration the strips are laid down on the drum 50 and follow the related curvature thereof. Furthermore, spaces are shown in Figure 6 between the transverse sections of the various strips, which typically are not formed in an actual application, and which were introduced in the Figure only for clearly distinguishing the various strips A, B from each other.

Strips A and B respectively have effective width $W1$ and $W2$, with $W1 \neq W2$. The number of applied strips A is $N1$ and the number of applied strips B is $N2$. In the embodiment shown in Figure 6 $N1$ is equal to $N2$, $i.e.$ the strips A, B are applied in equal number on the drum 50 (the shown number $N1, N2$ of strips A, B is purely exemplary and not necessarily indicative of an actual application). As shown in Figure 6, a first application apparatus 51 controls application of strips A onto a portion 52 of the drum 50, whereas a second application apparatus 53 controls application of strips B onto a portion 54 of the drum 50. The first application apparatus 51 and the second application apparatus 53 are preferably located on opposite sides of the drum 50. Specifically, the application portions 52, 54 respectively controlled by the first application apparatus 51 and by the second application apparatus 53 are located at 180° from each other. However, it may be provided that the first application apparatus 51 and the second application apparatus 53 be disposed in positions being different from those shown in Figure 6. For example, they could be disposed at a different angle from each other ($e.g.$ 90°) or be disposed side-by-side.

In operation, the first application apparatus 51 and the second application apparatus 53 may apply at the same time respectively a strip A and a strip B, so as to increase efficiency of the application process. The encircled numbers shown in Figure 6 define a sequence of application steps adapted for covering the whole circumference of the drum 50 with the strips A and B, each application step comprising a contemporary application of a strip A onto portion 52 and of a strip B onto portion 54. In particular, in application step (1) a first strip A is applied by first application apparatus 51 onto drum portion 52 and a first strip B is contemporaneously applied by second application apparatus 53 onto drum portion 54. After application of the first pair of strips A, B on opposite sides of the drum 50, the latter is rotated (in the direction shown by the arrow) of an angle corresponding to the cumulative effective width $W1+W2$ of the strips A, B. Then, in application step (2), a second strip A is applied by first application apparatus 51 onto drum portion 52 and a second strip B is contemporaneously applied by second application apparatus 53 onto drum portion 54. After application of the second pair of strips A, B on opposite sides of the drum 50, the latter is again rotated of an angle corresponding to the cumulative effective width $W1+W2$ of the strips A, B, and these steps are repeated until the whole circumference of the drum 50 is covered (after step (7) in Figure 6). As a result, perfect alternation of the strips A, B is obtained in the formed reinforcing layer. Overlapping of the side edge portions or abutting of the side edges of the strips A, B could be provided during application, according to the specific requirements.

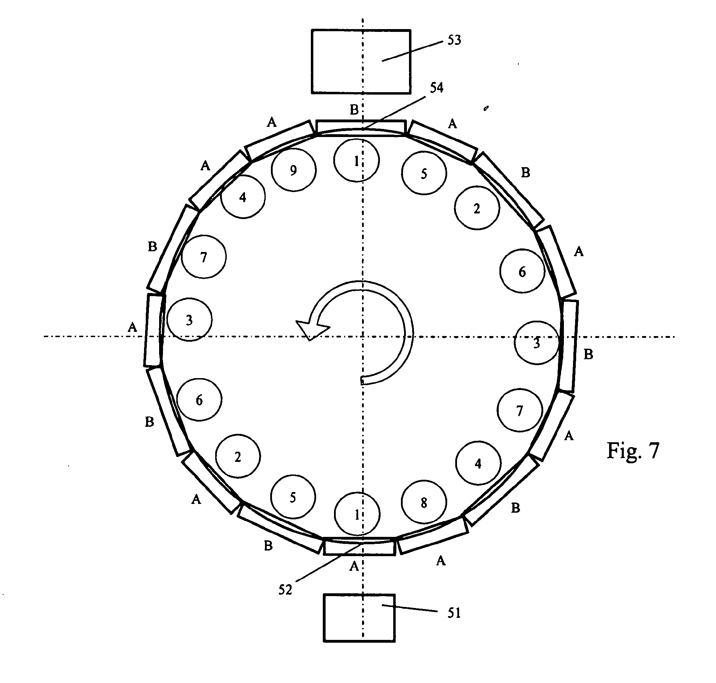

Figure 7 schematically shows a further embodiment of the application of the strips A, B having different effective width for forming a reinforcing layer (either a carcass ply or a belt layer). In the embodiment shown in Figure 7, the strips A, B are applied to the manufacturing drum 50, as in Figure 6, and respectively have effective width $W1$ and $W2$, with $W1 \neq W2$. The number of applied strips A is $N1$ and the number of applied strips B is $N2$. However, in the embodiment shown in Figure 7 $N1$ is different from $N2$, $i.e.$ the strips A, B are applied in unequal number on the drum 50 (the shown number $N1, N2$ of strips A, B is purely exemplary and not necessarily indicative of an actual application). The cumulative number $N1+N2$ of strips A, B is an even number. Exemplarily, in Figure 7 the number $N1$ of strips A is greater than the number $N2$ of strips B. As in Figure 6, a first application apparatus 51 controls application of strips A onto a portion 52 of the drum 50, whereas a second application apparatus 53 controls application of strips B onto a portion 54 of the drum 50. The first application apparatus 51 and the second application apparatus 53 are located on opposite sides of the drum 50. Specifically, the application portions 52, 54 respectively controlled by the first application apparatus 51 and by the second application apparatus 53 are located at 180° from each other. However, as it was previously noticed with reference to Figure 6, this has not to be considered as mandatory.

In operation, the first application apparatus 51 and the second application apparatus 53 may apply at the same time respectively a strip A and a strip B, so as to increase efficiency of the application process. This could be accomplished only for a certain number of pairs of strips A, B (at most until exhausting of the *N2* strips B to be laid down). The encircled numbers shown in Figure 7 define a sequence of application steps adapted for covering the whole circumference of the drum 50 with the strips A and B. Each application step may comprise either a contemporary application of a strip A onto portion 52 and of a strip B onto portion 54, or an application of a strip A alone. In particular, in application step (1) a first strip A is applied by first application apparatus 51 onto drum portion 52 and a first strip B is contemporaneously applied by second application apparatus 53 onto drum portion 54. After application of the first pair of strips A, B on opposite sides of the drum 50, the latter is rotated (in the direction shown by the arrow) of an angle corresponding to the cumulative effective width *W1+W2* of the strips A, B. Then, in application step (2), a second strip A is applied by first application apparatus 51 onto drum portion 52 and a second strip B is contemporaneously applied by second application apparatus 53 onto drum portion 54. After application of the second pair of strips A, B on opposite sides of the drum 50, the latter is again rotated of an angle corresponding to the cumulative effective width *W1+W2* of the strips A, B. These steps are repeated until application step (4), after which the drum 50 is rotated of a different angle with respect to the previous steps, namely an angle corresponding to a width *W1+W1+W2.* Then, application step (5) is performed, with contemporary application of the fifth pair of strips A, B. Between application steps (5), (6) and (7), the rotation angle of the drum 50 comes back to the previous value corresponding to the cumulative effective width *W1+W2* of the strips A, B. After application step (7), no more strips B have to be applied. The drum is rotated by an angle corresponding to the effective width *W2* of strip B and an application step (8) of the eighth strip A is performed. Finally, the drum is rotated of a suitable angle (corresponding to a sum of a number of effective widths of strips A, B) until the position in which the last strip A should be applied, in application step (9). The whole circumference of the drum 50 is thus covered. As a result, alternation of the strips A, B is obtained in the formed reinforcing layer only in some portions of the formed reinforcing layer, whereas other portions comprise strips of the same effective width adjacent to each other. Overlapping of the side edge portions or abutting of the side edges of the strips A, B could be provided during application, according to the specific requirements.

The Applicant has found that the use of strip-like elements of different effective widths for manufacturing the reinforcing components of a tyre may provide the level of flexibility requested by a complete production line. With this choice, the manufacturing process could be designed with fewer design constraints, without the need of large inventories of strips of different sizes, and/or without the need of continuously modifying the strip effective width in order to cope with a tyre size change and/or with a different target circumference to be covered.

By indicating with D the diameter of a generic target circumference to be covered by the strip-like elements for forming a given reinforcing layer, and with *W1*, *W2* the effective widths of the strip-like elements used, the number *N1* of the strip-like elements of effective width *W1* and the number *N2* of the strip-like elements of effective width *W2* to be applied for covering the target circumference corresponding to the diameter *D* shall satisfy the following relationship [1]:

$$W1\ N1\ +\ W2\ N2\ =\ D\pi \qquad [1]$$

Equation [1] holds in case the reinforcing layer being prepared is a carcass ply, whereas for the preparation of a belt layer the following relationship should be satisfied:

$$W1/sin(\theta)\ N1\ +\ W2/sin(\theta)\ N2\ =\ D\pi \quad [1']$$

wherein θ represents the angle of the reinforcing thread-like elements of the belt layer with respect to the equatorial plane of the tyre. In the following, Equation [1] will be taken as reference. However, the same considerations could be applied for Equation [1'] obtaining corresponding results.

The value of the effective widths *W1*, *W2* of the strip-like elements could always be chosen or expressed, at least as an approximation, as an integer number. Furthermore, the value of *D*π, *i.e.* the value of the target circumference to be covered by the strip-like elements for forming the given reinforcing layer, could also be expressed, at least as an approximation, as an integer number. This could be easily accomplished by expressing the effective width and target circumference values in the above relationship [1] in mm, for example. The accuracy of the approximation may define a tolerance for the calculation, so that the cumulative value *W1 N1 + W2 N2* (*i.e.* the length of the layer formed by the joining of the *N1* strip-like elements of effective width *W1* and the *N2* strip-like elements of effective width *W2*) differs from the target circumference to be covered by the reinforcing layer being formed by a value being controllable, in order to keep it under a preset threshold value. Preferred embodiments could provide a practical whole coverage of the target circumference by suitable choice of the target diameter *D*.

Equation [1] can thus be re-written as

$$W1\ N1 + W2\ N2 = C \qquad [2]$$

where *C* represents the integer approximation to the target circumference. Equation [2] contains only integer numbers (with *N1* and *N2* being the unknown quantities to be determined), and is known in mathematical literature as Diophantine equation. Conventional mathematical methods could be exploited for solving Equation [2] for any practical value of the approximated target circumference *C*, *i.e.* for any reinforcing layer and/or tyre size. For example, according to the Eulerian method, Equation [2] could be progressively transformed in equations with lower integer coefficients, being more easily solvable, and then, by progressive back transformations, finding the solution of Equation [2], *i.e.* determining the unknown *N1* and *N2*.

The solutions to the Equations [1] or [2] could be found in principle for any value of target circumference, once the values of the effective widths *W1* and *W2* have been fixed. In practice, "any value of target circumference" in the framework of a tyre production means any target circumference to be matched for any tyre size, and/or model, and/or reinforcing layer to be applied on manufacturing drums of any convenient size. Thus, a convenient choice of the effective widths *W1* and *W2* may lead to the provision of a series of pairs (*N1*, *N2*) adapted for applying any reinforcing layer in any tyre size and/or model on manufacturing drums of any convenient size.

Once the number *N1* of strip-like elements having effective width *W1* (strip-like elements A) and the number *N2* of strip-like elements having effective width *W2* (strip-like elements B) have been determined, the particular arrangement sequence of the strip-like elements A and B on the suitable support used during manufacturing of the tyre can be determined in the manner most convenient to the manufacturer. For example, production effectiveness and/or reduction of the whole cycle time for forming each reinforcing layer could be pursued in order to find the best application sequence for each pair (*N1*, *N2*). The embodiments disclosed above with reference to Figures 2-7 could be applicable examples.

As it is well known, tyre sizes are represented by rim bead seat design diameters, expressed in inches. For example, there are tyres respectively having bead seat diameters of 15 inches, 16 inches, 17 inches and so on. Coming back to Equation [2], when the manufacturing of the same reinforcing layer with the same strip-like elements for two different sizes is considered, the following relationships could be written:

$$1^{st}\ \text{size:} \qquad W1\ N1 + W2\ N2 = C1 \qquad [3]$$

$$2^{nd}\ \text{size:} \qquad W1\ N3 + W2\ N4 = C2 \qquad [4]$$

wherein $C1 = D1\ \pi$ and $C2 = D2\pi$, *D1* and *D2* being related to the two tyre sizes. Let's assume that the 2nd size is greater than the 1st size. If the two tyre sizes are subsequent to each other, and *D1* and *D2* are expressed in inches, it follows that $D2 = D1+1$, so that $C2 = C1+\pi$, if expressed in inches, or, in other words, *C1* and *C2* differ with each other by about 80 mm (more precisely about 79.76 mm). Furthermore, since *N1, N2, N3, N4* are all integers, and *N3* and *N4* refer to a greater tyre size, the following relationships could be written:

$$N3 = N1 + inc1 \qquad [5]$$

$$N4 = N2 + inc2 \qquad [6]$$

wherein *inc1* and *inc2* are integer numbers representing the difference in number between the strip-like elements needed for forming the reinforcing layer in the 1st tyre size and in the 2nd tyre size.

All this being taken into account, Equation [4] could be re-written as:

$$W1 (N1 + inc1) + W2 (N2 + inc2) = C1 + \pi \qquad [4']$$

which (see Equation [3]) could be also written as

$$W1\ inc1 + W2\ inc2 = \pi \qquad [7]$$

Equation [7] gives a rule which could be followed to suitably choose the effective widths $W1$ and $W2$ of the strip-like elements. For example, by considering $inc1=1$ and $inc2=1,$ and by approximating the value of $\pi$ as being 79 mm, one can choose $W1$=40 mm and $W2$=39 mm. As another example, by considering $inc1=1$ and $inc2=2,$ and by approximating the value of $\pi$ as being 80 mm, one can choose $W1$=27 mm and $W2$=26 mm.

In the following Table 1, results are reported for preparing a carcass ply in different tyre sizes, ranging from 17 inches to 23 inches. It is assumed that the carcass ply should be formed by strip-like elements having effective widths $W1$=40 mm and $W2$=39 mm, and that the strip-like elements are applied to a cylinder support having a diameter starting from 490 mm at 17 inches (the diameters of the cylinder supports to be used for manufacturing the tyres of the other sizes could be easily derived, since they lead to target circumferences differing with each other by a value of $\pi$, as disclosed above). The table reports, for each tyre size (TS), the number of needed strip-like elements of effective width $W1$=40 mm ($N1$), the number of needed strip-like elements of effective width $W2$=39 mm ($N2$), the target circumference to be covered (TC), the cumulative sum of the effective widths of the ($N1$+$N2$) strip-like elements (CS). As it can be seen, the carcass ply could be advantageously produced with a minimum difference (within few millimeters) between the cumulative sum of the effective widths of the strip-like elements and the target circumference to be covered. It is noticed that the table could be completed for any practical tyre size, even lower than 17 inches or higher than 23 inches.

**Table 1**

| TS (inches) | N1 | N2 | TC (mm) | CS (mm) |
|---|---|---|---|---|
| 17 | 19 | 20 | 1538.6 | 1540 |
| 18 | 20 | 21 | 1618.3 | 1619 |
| 19 | 21 | 22 | 1698.0 | 1698 |
| 20 | 22 | 23 | 1777.7 | 1777 |
| 21 | 23 | 24 | 1857.4 | 1856 |
| 22 | 24 | 25 | 1937.1 | 1935 |
| 23 | 25 | 26 | 2016.8 | 2014 |

In the above examples, the effective widths (expressed in mm) of the strip-like elements were chosen so as $W2$=$W1$-1. In this particular case, the solutions to Diophantine Equation [2] could explicitly be written as:

$$N1 = C + k\ W2 \qquad [8]$$

$$N2 = -C - k\ W1 \qquad [9]$$

wherein k is any integer non-zero number. In fact, by substituting expressions [8] and [9] and reminding that $W2$=$W1$-1, Equation [2] could be rewritten as:

$$W1\ (C + k\ W2) + W2\ (-C - k\ W1) = C$$
$$\Longrightarrow \quad W1\ C - W2\ C = C$$
$$\Longrightarrow \quad W1\ C - (W1\text{-}1)\ C = C$$
$$\Longrightarrow \quad C = C$$

which is always verified. Thus, by appropriately choosing the value of the parameter k one can find the numbers $N1$ and $N2$ in the most convenient way.

In the following Table 2, results are reported for preparing a carcass ply in different tyre sizes, ranging from 17 inches to 23 inches. It is assumed that the carcass ply should be formed by strip-like elements having effective widths $W1$=27 mm and $W2$=26 mm, and that the strip-like elements are applied to a cylinder support having a diameter starting from 472.3 mm at 17 inches (the diameters for the other sizes could be easily derived, as observed above). The table reports, for each tyre size (TS), the value of the parameter k, the number of needed strip-like elements having effective width $W1$=27 mm ($N1$), the number of needed strip-like elements having effective width $W2$=26 mm ($N2$), the target circumference (TC), the cumulative sum of the effective widths of the ($N1$+$N2$) strip-like elements (CS). As it can be seen, the carcass ply could be advantageously produced with a number $N1$=$N2$ or $N1$=$N2$+1 of strip-like elements of different effective width, with a minimum difference (almost always within 1 mm) between the cumulative sum of the effective widths of the strip-like elements and the target circumference to be covered.

**Table 2**

| TS (inch) | K | $N1$ | $N2$ | TC (mm) | CS (mm) |
|---|---|---|---|---|---|
| 17 | -56 | 28 | 28 | 1483.0 | 1484 |
| 18 | -59 | 30 | 29 | 1562.7 | 1564 |
| 19 | -62 | 31 | 31 | 1642.4 | 1643 |
| 20 | -65 | 33 | 32 | 1722.1 | 1723 |
| 21 | -68 | 34 | 34 | 1801.8 | 1802 |
| 22 | -71 | 36 | 35 | 1881.5 | 1882 |
| 23 | -74 | 37 | 37 | 1961.2 | 1961 |

As shown with the above examples, a carcass ply could be conveniently formed by using two strip-like elements having different effective widths. For the preparation of a second carcass ply to be superposed to the first (prepared with $N1$ strip-like elements of effective width $W1$ and $N2$ strip-like elements of effective width $W2$), the increase in the target circumference to be covered due to the thickness of the first carcass ply should be taken into account. Being G the thickness of the first carcass ply, the increase (versus C) of the target circumference is given by $2\pi G$. Such an increase could be managed by modifying the numbers $N1$ and $N2$ and taking into account of the difference between the effective widths $W2$-$W1$.

For example, by considering a thickness of the first carcass ply of 1 mm and a difference between the effective widths of the strip-like elements of 1 mm (as in the above examples), the increase in the target circumference becomes about 6 mm, which could be managed by applying ($N1$+6) strip-like elements of effective width $W1$ and ($N2$-6) strip-like elements of effective width $W2$ (assuming that $W2$<$W1$).

Alternatively, the second carcass ply could be formed by using the same number $N1$ and $N2$ of strip-like elements of the first carcass ply, by calculating from the target circumference increase a distributed gap to be applied between the $N1$+$N2$ strip-like elements.

In any case, once the effective widths $W1$ and $W2$ of the strip-like elements have been chosen, any carcass ply for any tyre size could be prepared with a suitable combination of the strip-like elements.

The above examples were disclosed with reference to the preparation of a carcass ply. As already said, similar considerations could be performed for the preparation of the belt layers, starting from Equation [1'] instead of Equation [1]. The effective widths of the strip-like elements to be used for the preparation of the belt layers could be the same as the effective widths of the strip-like elements to be used for the preparation of the carcass ply or plies, or they can be different.

The above considerations on the Diophantine equations and related examples could refer to an application of the strip-like elements performed by abutting side edges of the strip-like elements with each other. In such case, the effective widths $W1$ and $W2$ could correspond to the actual widths of the strip-like elements. In case an overlapping between side edge portions of the strip-like elements is used during the application thereof, the effective widths $W1$ and $W2$ correspond to the widths of the portions of the strip-like elements not being destined to overlap adjacent strip-like elements. A width of overlapping portion is summed to the effective widths in order to find the actual widths of the strip-like elements to be prepared for the formation of the reinforcing layers.

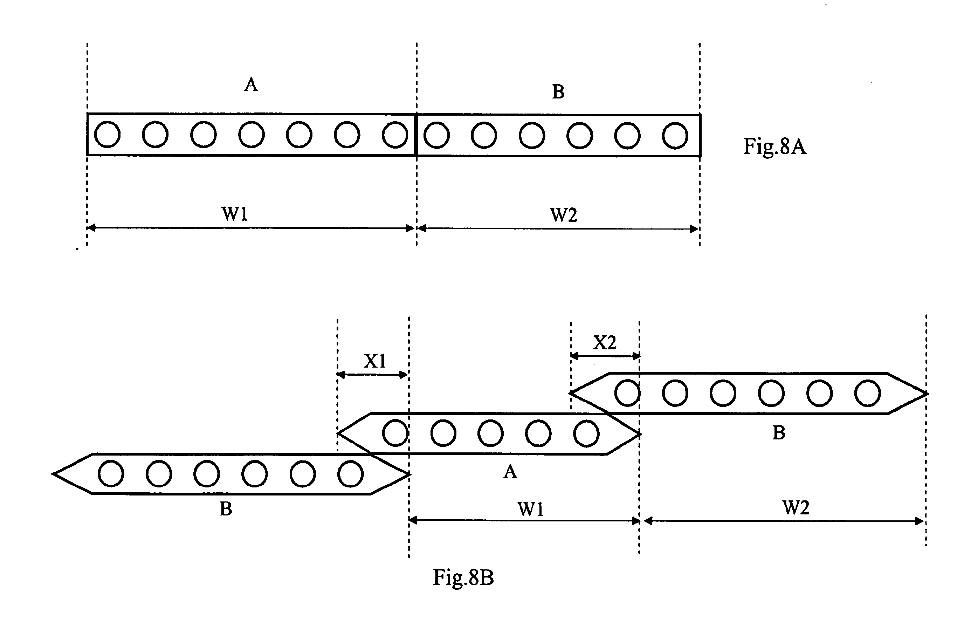

For example, Figure 8A schematically shows two strip-like elements A and B having edge sides abutted with each other, and enclosing a respective different number of thread-like elements. The two strip-like elements A and B are shown in transverse section, which (ideally) is of rectangular shape. The actual widths of the strip-like elements correspond to the effective widths $W1$ and $W2$ in this case.

On the other hand, as another example, Figure 8B schematically shows three strip-like elements, one denoted as A and two denoted as B, having tapering edge side portions. The two strip-like elements denoted as B are equal to each other and each enclose a different number of thread-like elements with respect to strip-like element A. The two strip-like elements A and B are shown in transverse section, which (ideally) is of hexagonal shape. As it can be seen, the strip-like elements of Figure 8B have portions destined to overlap an adjacent strip-like element. In particular, strip-like element A has an edge side portion having width $X1$ destined to overlap a portion of an adjacent strip-like element, and an effective width $W1$. In its turn, strip-like element B has an edge side portion having width $X2$ destined to overlap a portion of an adjacent strip-like element, and an effective width $W2$. The actual widths of the strip-like elements A and B are thus respectively equal to $W1+X1$ and $W2+X2$ in this case.

It is noticed that the invention is not limited to any particular shape of strip-like element transverse section, so that the shapes shown in Figures 8A and 8B should be considered as purely exemplary.

The invention advantageously allows overcoming many problems involved in a complete tyre production line, as disclosed above. In addition, it is further noticed that an improvement to the tyres manufactured according to the above could also be obtained. In fact, a greater uniformity could be obtained due to the matching of the target circumference for any reinforcing layer and/or for any tyre size. Moreover, the use of strip-like elements of different effective widths for the formation of the reinforcing layers may reduce the occurrence of vibrational effects due to harmonic components caused by jointed portions regularly disposed along the circumference of the tyre, especially with alternated configurations between the strip-like elements of a first effective width and the strip-like elements of a second, different effective width.

Although the present invention has been disclosed and described by way of some embodiments, it is apparent to those skilled in the art that several modifications to the described embodiments, as well as other embodiments of the present invention are possible without departing from the scope thereof as defined in the appended claims.

For example, while the detailed description always made reference to two pluralities of strip-like elements, it is noticed that the same or similar considerations could be repeated in case of use of more than two pluralities of strip-like elements. As another example, while the detailed description always made reference to the manufacturing of carcass plies for radial tyres, it is noticed that the same or similar considerations could be repeated for the manufacturing of carcass plies for non-radial (*e.g.* cross-ply) tyres. As another example, while the detailed description always made reference to the preparation of reinforcing layers (carcass plies, belt layers) of the tyre, it is noticed that the same or similar considerations could be repeated for the preparation of other reinforcing components of the tyre including reinforcing thread-like elements, such as, *e.g.*, a chafer provided for bead reinforcement.

**Claims**

1.  A process for manufacturing a tyre (1) comprising:

    - providing a first plurality of strip-like elements (23, A, B), each substantially having a first effective width (W1, W2);
    - providing at least a second plurality of strip-like elements (23, A, B), each substantially having a second effective width (W1, W2);
    - arranging the strip-like elements of said first plurality and of said second plurality on a support (25, 50) by approaching side edge portions thereof to one another, so as to form at least one reinforcing component (2, 5, 7) of the tyre on said support (25, 50);

    **characterized in that** said first effective width is different from said second effective width.

2.  A process according to claim 1, wherein said approaching the side edge portions of the strip-like elements of the first plurality and of the second plurality (23, A, B) comprises abutting side edges of the strip-like elements to one another.

3. A process according to claim 1, wherein said approaching the side edge portions of the strip-like elements of the first plurality and of the second plurality (23, A, B) comprises overlapping the side edge portions of the strip-like elements to one another.

4. A process according to any one of the previous claims, wherein said arranging the strip-like elements of the first plurality and of the second plurality (23, A, B) comprises arranging strip-like elements of the first plurality alternated with strip-like elements of the second plurality in at least one portion of the at least one reinforcing component.

5. A process according to any one of claims 1 to 3, wherein said arranging the strip-like elements of the first plurality and of the second plurality (23, A, B) comprises:

   - arranging the strip-like elements of the first plurality by approaching side edge portions thereof to one another, so as to form a first portion of said at least one reinforcing component (2, 5, 7);
   - arranging the strip-like elements of the second plurality by approaching side edge portions thereof to one another, so as to form a second portion of said at least one reinforcing component (2, 5, 7);
   - approaching side edge portions of the first and the second portions of said at least one reinforcing component to one another to form said at least one reinforcing component (2, 5, 7).

6. A process according to any one of the previous claims, wherein a total length of the at least one reinforcing component (2, 5, 7) formed by the arranged strip-like elements of the first plurality and of the second plurality (23, A, B) differs from a respective target circumference of said at least one reinforcing component (2, 5, 7) by a value being lower than a preset threshold value.

7. A process according to claim 6, wherein said preset threshold value is lower than or equal to 0.5% of the target circumference.

8. A process according to any one of the previous claims, wherein said first plurality of strip-like elements comprises a first integer number $N1$ of strip-like elements, wherein said second plurality of strip-like elements comprises a second integer number $N2$ of strip-like elements, and wherein both $N1$ and $N2$ are greater than or equal to $(N1+N2)/5$.

9. A process according to any one of the previous claims, wherein said arranging the strip-like elements of the first plurality and of the second plurality (23, A, B) on said support (25, 50) comprises arranging the strip-like elements of the first plurality and of the second plurality (23, A, B) on a surface of said support (25, 50), said surface being a cylindrical surface, or a toroidal surface, or a plane surface.

10. A tyre (1) comprising at least one reinforcing component (2, 5, 7) formed by approached strip-like elements (23, A, B), wherein said strip-like elements (23, A, B) comprise a first plurality of strip-like elements each substantially having a first effective width (W1, W2), and a second plurality of strip-like elements each substantially having a second effective width (W1, W2), **characterized in that** said first effective width is different from said second effective width.

11. A tyre (1) according to claim 10, wherein each strip-like element of the first plurality comprises a first number of reinforcing thread-like elements (6, 8) and each strip-like element of the second plurality comprises a second number of reinforcing thread-like elements (6, 8), different from the first number.

12. A tyre (1) according to claim 11, wherein said first and second number of reinforcing thread-like elements (6, 8) are disposed so as to have substantially the same pitch in both the strip-like elements of said first plurality and the strip-like elements of said second plurality (23, A, B).

13. A tyre (1) according to any one of claims 10 to 12, wherein said at least one reinforcing component of the tyre comprises at least one carcass ply (2).

14. A tyre (1) according to any one of claims 10 to 13, wherein said at least one reinforcing component of the tyre comprises at least one belt layer (5, 7).

15. A tyre (1) according to any one of claims 10 to 14, wherein said first and second effective widths (W1, W2) differ from each other of at most 5 mm.

**16.** A tyre (1) according to any one of claims 10 to 15, wherein said first effective width and said second effective width (W1, W2) are higher than or equal to 15 mm.

**Patentansprüche**

**1.** Verfahren zur Herstellung eines Reifens (1), das umfasst:

- Bereitstellen einer ersten Mehrzahl von streifenförmigen Elementen (23, A, B), die jeweils im Wesentlichen eine erste effektive Breite (W1, W2) aufweisen;
- Bereitstellen wenigstens einer zweiten Mehrzahl von streifenförmigen Elementen (23, A, B), die jeweils im Wesentlichen eine zweite effektive Breite (W1, W2) aufweisen;
- Aufbringen der streifenförmigen Elemente der ersten Mehrzahl und der zweiten Mehrzahl auf einen Träger (25, 50) durch Annähern von Seitenrandabschnitten davon aneinander, so dass wenigstens eine Verstärkungskomponente (2, 5, 7) des Reifens auf dem Träger (25, 50) ausgebildet wird;

dadurch gekennzeichnet, dass die erste effektive Breite sich von der zweiten effektiven Breite unterscheidet.

**2.** Verfahren nach Anspruch 1, bei dem das Annähern der streifenförmigen Elemente der ersten Mehrzahl und der zweiten Mehrzahl (23, A, B) ein in Angrenzung bringen von Seitenrändern der streifenförmigen Elemente aneinander umfasst.

**3.** Verfahren nach Anspruch 1, bei dem das Annähern der Seitenrandabschnitte der streifenförmigen Elemente der ersten Mehrzahl und der zweiten Mehrzahl (23, A, B) ein Überlappen der Seitenrandabschnitte der streifenförmigen Elemente umfasst.

**4.** Verfahren nach einem der vorhergehenden Ansprüche, bei dem das Anordnen der streifenförmigen Elemente der ersten Mehrzahl und der zweiten Mehrzahl (23, A, B) ein Anordnen der streifenförmigen Elemente der ersten Mehrzahl abwechselnd mit streifenförmigen Elementen der zweiten Mehrzahl in wenigstens einem Abschnitt der wenigstens einen Verstärkungskomponente umfasst.

**5.** Verfahren nach einem der Ansprüche 1 bis 3, bei dem das Anordnen der streifenförmigen Elemente der ersten Mehrzahl und der zweiten Mehrzahl (23, A, B) umfasst:

- Anordnen der streifenförmigen Elemente der ersten Mehrzahl durch Annähern von Seitenrandabschnitten davon aneinander, um einen ersten Abschnitt der wenigstens einen Verstärkungskomponente (2, 5, 7) auszubilden;
- Anordnen der streifenförmigen Elemente der zweiten Mehrzahl durch Annähern von Seitenrandabschnitten davon aneinander, um einen zweiten Abschnitt der wenigstens einen Verstärkungskomponente (2, 5, 7) auszubilden;
- Annähern von Seitenrandabschnitten der ersten und zweiten Abschnitte der wenigstens einen Verstärkungskomponente aneinander, um die wenigstens eine Verstärkungskomponente (2, 5, 7) auszubilden.

**6.** Verfahren nach einem der vorhergehenden Ansprüche, bei dem eine Gesamtlänge von der wenigstens einen Verstärkungskomponente (2, 5, 7), die durch die Anordnung von streifenförmigen Elementen der ersten Mehrzahl und der zweiten Mehrzahl (23, A, B) ausgebildet wird, sich von einem entsprechenden Zielumfang der wenigstens einen Verstärkungskomponente (2, 5, 7) um einen Wert unterscheidet, der kleiner als ein voreingestellter Schwellenwert ist.

**7.** Verfahren nach Anspruch 6, bei dem voreingestellte Schwellwert kleiner als oder gleich 0,5% des Zielumfangs ist.

**8.** Verfahren nach einem der vorhergehenden Ansprüche, bei dem die erste Mehrzahl von streifenförmigen Elementen eine erste Ganzzahl $N1$ von streifenförmigen Elementen umfasst, wobei die zweite Mehrzahl von streifenförmigen Elementen eine zweite Ganzzahl $N2$ von streifenförmigen Elementen umfasst, und wobei sowohl $N1$ als auch $N2$ größer als oder gleich $(N1+N2)/5$ sind.

**9.** Verfahren nach einem der vorhergehenden Ansprüche, bei dem die Anordnung der streifenförmigen Elemente der ersten Mehrzahl und der zweiten Mehrzahl (23, A, B) auf dem Träger (25, 50) ein Anordnen der streifenförmigen Elemente der ersten Mehrzahl und der zweiten Mehrzahl (23, A, B) auf einer Oberfläche des Trägers (25, 50) umfasst, wobei die Oberfläche eine zylindrische Oberfläche oder eine toroidförmige Oberfläche oder eine ebene Oberfläche ist.

10. Reifen (1), der wenigstens eine Verstärkungskomponente (2, 5, 7) umfasst, die durch angenäherte streifenförmige Elemente (23, A, B) ausgebildet ist, wobei die streifenförmigen Elemente (23, A, B) eine erste Mehrzahl von streifenförmigen Elementen, die jeweils im Wesentlichen eine erste effektive Breite (W1, W2) aufweisen, und eine zweite Mehrzahl von streifenförmigen Elementen, die jeweils im Wesentlichen eine zweite effektive Breite (W1, W2) aufweisen, umfasst, **dadurch gekennzeichnet, dass** die erste effektive Breite sich von der zweiten effektiven Breite unterscheidet.

11. Reifen (1) nach Anspruch 10, bei dem jedes streifenförmige Element der ersten Mehrzahl eine erste Anzahl von bandförmigen Verstärkungselementen (6, 8) umfasst und jedes streifenförmige Element der zweiten Mehrzahl eine zweite Anzahl von bandförmigen Verstärkungselementen (6, 8) umfasst, die sich von der ersten Anzahl unterscheidet.

12. Reifen (1) nach Anspruch 11, bei dem die erste und zweite Anzahl von bandförmigen Verstärkungselementen (6, 8) so angeordnet sind, dass diese im Wesentlichen den gleichen Abstand sowohl in den streifenförmigen Elementen der ersten Mehrzahl als auch den streifenförmigen Elementen der zweiten Mehrzahl (23, A, B) aufweisen.

13. Reifen (1) nach einem der Ansprüche 10 bis 12, bei dem die wenigstens eine Verstärkungskomponente des Reifens wenigstens eine Karkassenlage (2) umfasst.

14. Reifen (1) nach einem der Ansprüche 10 bis 13, bei dem die wenigstens eine Verstärkungskomponente des Reifens wenigstens eine Gürtelschicht (5, 7) umfasst.

15. Reifen (1) nach einem der Ansprüche 10 bis 14, bei dem die erste und zweite effektive Breite (W1, W2) sich um höchstens 5 mm voneinander unterscheiden.

16. Reifen (1) nach einem der Ansprüche 10 bis 15, bei dem die erste effektive Breite und die zweite effektive Breite (W1, W2) größer als oder gleich 15 mm sind.

**Revendications**

1. Procédé pour manufacturer un pneumatique (1), comprenant:

   - une fourniture d'une première pluralité d'éléments (23, A, B) en forme de bande, chacun ayant sensiblement une première largeur effective (W1, W2);
   - une fourniture d'au moins une seconde pluralité d'éléments (23, A, B) en forme de bande, chacun ayant sensiblement une seconde largeur effective (W1, W2);
   - une disposition des éléments en forme de bande de ladite première pluralité et de ladite seconde pluralité sur un support (25, 50) en approchant des parties de bords latéraux de l'une et l'autre, pour former au moins un composant de renfort (2, 5, 7) du pneumatique sur ledit support (25, 50); **caractérisé en ce que** ladite première largeur effective est différente de ladite seconde largeur effective.

2. Procédé selon la revendication 1, dans lequel ladite approche des parties de bords latéraux des éléments (23, A, B) en forme de bande de la première pluralité et de la seconde pluralité comprend un appui des bords latéraux des éléments en forme de bande les uns contre les autres.

3. Procédé selon la revendication 1, dans lequel ladite approche des parties de bords latéraux des éléments (23, A, B) en forme de bande de la première pluralité et de la seconde pluralité comprend un chevauchement des parties de bords latéraux des éléments en forme de bande les unes par rapport aux autres.

4. Procédé selon l'une quelconque des revendications précédentes, dans lequel ladite disposition des éléments (23, A, B) en forme de bande de la première pluralité et de la seconde pluralité comprend une disposition d'éléments en forme de bande de la première pluralité alternés avec des éléments en forme de bande de la seconde pluralité dans au moins une partie de l'au moins un composant de renfort.

**5.** Procédé selon l'une quelconque des revendications 1 à 3, dans lequel ladite disposition des éléments (23, A, B) en forme de bande de la première pluralité et de la seconde pluralité comprennent:

- une disposition des éléments en forme de bande de la première pluralité en approchant des parties de bords latéraux de ces éléments les unes par rapport aux autres, pour former une première partie dudit au moins un composant de renfort (2, 5, 7);
- une disposition des éléments en forme de bande de la seconde pluralité en approchant des parties de bords latéraux de ces éléments les unes par rapport aux autres, pour former une seconde partie dudit au moins un composant de renfort (2, 5, 7);
- une approche des parties de bords latéraux de la première et de la seconde parties dudit au moins un composant de renfort l'une par rapport à l'autre pour former au moins un composant de renfort (2, 5, 7).

**6.** Procédé selon l'une quelconque des revendications précédentes, dans lequel une longueur totale de l'au moins un composant de renfort (2, 5, 7) formé par la disposition des éléments (23, A, B) en forme de bande de la premier pluralité et de la seconde pluralité diffère d'une circonférence de cible respective dudit au moins un composant de renfort (2, 5, 7) d'une valeur inférieure à une valeur prédéfinie de seuil.

**7.** Procédé selon la revendication 6, dans lequel ladite valeur prédéfinie de seuil est inférieure ou égale à 0.5% de la circonférence de cible.

**8.** Procédé selon l'une quelconque des revendications précédentes, dans lequel ladite première pluralité d'éléments en forme de bande contient un premier nombre entier N1 d'éléments en forme de bande, dans lequel ladite seconde pluralité d'éléments en forme de bande contient un second nombre entier N2 d'éléments en forme de bande, et dans lequel N1 et N2 sont tous deux supérieurs ou égaux à (N1+N2)/5.

**9.** Procédé selon l'une quelconque des revendications précédentes, dans lequel ladite disposition des éléments en forme de bande (23, A, B) de la première pluralité et de la seconde pluralité sur ledit support (25, 50) comprend une disposition des éléments (23, A, B) en forme de bande de la première pluralité et de la seconde pluralité sur une surface dudit support (25, 50), ladite surface étant une surface cylindrique, ou une surface toroïdale, ou une surface plane.

**10.** Pneumatique (1) comprenant au moins un composant de renfort (2,5,7) formé par approche d'éléments (23, A, B) en forme de bande, dans lequel lesdits éléments en forme de bande (23, A, B) comprennent une première pluralité d'éléments en forme de bande ayant chacun sensiblement une première largeur effective (W1, W2), et une seconde pluralité d'éléments en forme de bande ayant chacun sensiblement une seconde largeur effective (W1, W2), **caractérisé en ce que** ladite première largeur effective est différente de ladite seconde largeur effective.

**11.** Pneumatique (1) selon la revendication 10, dans lequel chaque élément en forme de bande de la première pluralité comprend un premier nombre d'éléments de renfort (6, 8) en forme de fil et chaque élément en forme de bande de la seconde pluralité comprend un second nombre d'éléments de renfort (6, 8) en forme de fil, différent du premier nombre.

**12.** Pneumatique (1) selon la revendication 11, dans lequel lesdits premier et second nombres d'éléments de renfort (6, 8) en forme de fil sont placés de façon à avoir sensiblement le même emplacement à la fois dans les éléments en forme de bande de ladite première pluralité et les éléments (23, A, B) en forme de bande de ladite seconde pluralité.

**13.** Pneumatique (1) selon l'une quelconque des revendications 10 à 12, dans lequel ledit au moins un composant de renfort du pneumatique comprend au moins une nappe (2) de carcasse.

**14.** Pneumatique (1) selon l'une quelconque des revendications 10 à 13, dans lequel ledit au moins un composant de renfort du pneumatique comprend au moins une couche (5, 7) de ceinture.

**15.** Pneumatique (1) selon l'une quelconque des revendications 10 à 14, dans lequel lesdites première et seconde longueurs effectives (W1, W2) diffèrent l'une de l'autre d'au plus 5 mm.

**16.** Pneumatique (1) selon l'une quelconque des revendications 10 à 15, dans lequel ladite première largeur effective et ladite seconde largeur effective (W1, W2) sont supérieures ou égales à 15mm.

Fig. 1

Fig. 1A

Fig. 2

Fig. 3

Fig. 5

Fig. 4

Fig. 6

Fig. 7

EP 2 121 294 B1

Fig.8A

Fig.8B

**EP 2 121 294 B1**

**REFERENCES CITED IN THE DESCRIPTION**

**Patent documents cited in the description**

- US 20030051794 A
- EP 1698490 A
- US 2003051794 A1
- US 2003051794 A
- EP 1650014 A1
- EP 1510331 A1
- EP 1095761 A2
- EP 1652658 A
- EP 1568476 A